# EUROPEAN PATENT APPLICATION

(11) **EP 2 665 011 A1**
(43) Date of publication of application: **20.11.2013**
(21) Application number: 13168254.4
(22) Date of filing: 17.05.2013
(51) Int. Cl.: G06F 21/00, G06F 21/10

(54) **Methods and system of controlling of access to digital media content**

(30) Priority: 18.05.2012 EP 12168552
(71) Applicant: Erhart, Peter, 5415 Nussbaumen (CH); Erhart, Luca, 5415 Nussbaumen (CH)
(72) Inventor: Erhart, Peter, 5415 Nussbaumen (CH); Erhart, Luca, 5415 Nussbaumen (CH)
(74) Representative: Liebetanz, Michael

(57) **Abstract**

A method of controlling access to digital media content, especially pictures, videos and sound, wherein the digital media content is available within a computer providing a time information, comprises the steps of: providing an activation key associated to grant access to the digital media content, creating an encapsulated media file, comprising the actual digital media content and a media access part comprising said activation key, checking key information provided by the owner to the encapsulated media file, if it is in a predetermined relationship with said first activation key stored in association with the media access part, providing access to the digital media content if the checking step is successful. The activation key comprises at least a time indication and in that the check comprises a check of the time indication against said time information for said predetermined relationship. After creation of the encapsulated media file the creator get access to the content of the media access part by entering the password which is preset by him within the media access part during creation of the encapsulated media file. The time information is retrieved via a communication channel from a time deamon.

## Description

### TECHNICAL FIELD

The present invention relates to a method and system of controlling access to digital media content, especially pictures, videos and sound, wherein the digital media content is available within a computer providing time information, comprising the steps of: providing an activation key associated to grant access to the digital media content, creating an encapsulated media file, comprising the actual digital media content and a media access part comprising said activation key, checking key information provided by the user to the encapsulated media file, if it is in a predetermined relationship with said first activation key stored in association with the media access part, providing access to the digital media content if the checking step is successful.

### PRIOR ART

It is known for a long time to protect especially software against unauthorized distribution. Such a method is known from US 4,458,315, wherein the piece of software to be protected is arranged to store first key information. A second key means which is physically separate from the program is provided to the customer with the program. Either the software itself or an additional program routine is adapted to access the first key and the second key prior to perform a significant part of the program to be protected to perform a comparison operation. Only if first and second key are in a predetermined relationship, access to the computer program is allowed.

A method of controlling user access to digital media content with some of the features of the preamble of claim 1 is known from WO 03/003172. Within the method disclosed in said document the media file comprises the actual media data and a media access file as a shell. The user is provided with a first activation key, when such a user becomes an authorized user of a digital content. Said first key is stored in association with a program code needed for representing the digital contact to the user at a specific user terminal. Then the access to the media is only allowed if the first activation key stored in association with such an access program is in a predetermined relationship with a second activation key which is stored in the media access file part of the media file. This allows restricting access to media upon reception of an activation key.

However, the problem of user in the internet is often different. If an image or a video file is uploaded onto the net, the further representation of this digital media is without control of the user. Such media can be distributed and visualized by any user over time. However, a user may be interested that his data cannot be accessed anymore after a specific time period.

It is known to distribute software, often so called shareware, with an embedded time stamp, which does not allow execution of the program after a predetermined point in time. Said predetermined point in time is created and stored in the software at the first execution of the software. This relates to the execution of the software as such. In such a case a time stamp is stored together with the software, only allowing access as long as the current time of the computer used is earlier then the predetermined end of use time of the file.

A method of controlling user access to digital media content according to the preamble of claim 1 is known from Marc A. Kaplan "IBM Cryptolopes, SuperDistribution and Digital Rights Management" as internet citation 30-Dec-1996, XP002132994, wherein the check of the time information is conducted via a communication channel from a remote source delivering the time information.

US 7,047 411 B1 relates inter alia to the disclosure of an implementation of binding an activation key to a particular device.

### SUMMARY OF THE INVENTION

Based on this prior art it is therefore an object of the present invention to provide a method and a system allowing an improved controlled access to digital media files for a limited period of time without requesting specific set-up steps and conditions from the user who intends to use these media files.

This object of the invention and further advantages are reached for a method having the features of the preamble of claim 1 through the features of the characterizing part of claim 1, wherein the time information is retrieved via a communication channel from a time deamon.

The invention is inter alia based on the insight that the digital media file is encrypted with a password provided by the digital content creator allowing the digital content owner who does not know the password to access the file only over a predetermined life time of the digital media file. Here the term owner relates to the user having access to the file, since the file is e.g. stored on his computer. Throughout the specification the term owner and user are used synonymously, wherein owner refers to the user as person having access to the file and wants to open it, wherein the term creator is the person who possesses the right to control access to a specific media file through defining the time period.

The time check can be carried out against the own verified system time of the computer used to access the media. Although this check can be performed automatically, it can be said, that it is the owner of the encapsulated media file who "provides" this time information, since the owner is responsible for the technical environment of storage and access of the media file. This approach is different to embodiments from prior art where the time information is retrieved via a communication channel from a predetermined remote source delivering said time information and forwarding it to the computer. In the present case, the time information is related to a verified time source provided by a specialized time deamon and cannot be tampered.

Within the present specification a creator is the person having provided and created the protected media file, e.g. the "BTE"-file. He chooses the password and provides the additional rules to access the file. The owner is the person having physical access to the protected media file, i.e. who tries to read it. He is able to use/consume the media file according to the access rules predetermined by the creator.

It is an advantageous concept of the invention to provide after a failed time indication a possibility to the owner who wishes to still see the media a possibility to update the time information of the media file, i.e. update the activation key with a renewed time information, such extending the possibility to visualize the media content for a further time interval. Therefore media content identification information is transmitted via a communication channel to a second predetermined remote source and release time update information relating to said media content is retrieved via said communication channel from said predetermined second remote source updating the activation key with a renewed time indication allowing a positive check of the said predetermined relationship and subsequent visualization.

The activation key can further comprise a check of a membership to a predetermined group. Then the media content is only accessibly to accredited members of a registered usergroup.

The activation key can further comprise creator identification information and the check comprises a check of this information against owner identification information stored on the computer. This owner identification information can also be used as creator information and allows the creator of the files to always access his files on his own computer directly without check of the timeline. This access does not include an automatic access to the media access part. In other words, the encapsulated media file comprises a password to enter and especially modify the media access part. Changing the content of the media access part is only possible for the creator after entering the password which is preset by the creator of the encapsulated media file within the media access part.

The activation key can further comprise a release check requirement. Then media content checking properties identification information is transmitted via a communication channel to a third predetermined remote source and release information relating to said media content is retrieved via said communication channel from said third predetermined remote source. This allows blocking specific media content after or - on the contrary - before a specific date and time.

The activation key can further comprise password information and the check comprises a check of the password information against an owner input.

The remote source computers, here mentioned as first, second or third remote computer can also be the same computer, i.e. a site of the creator of the media content in the cloud storing the different lifetime information for the created media content.

Further embodiments of the invention are laid down in the dependent claims.

A system for controlling access to digital media content, especially pictures, videos and sound, comprises a computer having a processor and a memory. The digital media is available within said computer, e.g. the digital media is stored in the memory of the computer or can be retrieved from remote memory devices over interfaces. Said computer is adapted to provide time information, e.g. the own verified system time from a remote source. The digital media itself comprises an activation key associated to grant access to the digital media content in an encapsulated media file, comprising the actual digital media content and a media access part comprising said activation key. This activation key comprises at least a time indication and the system is adapted to carry out a check of the time indication against said time information for a predetermined relationship to allow access to the digital media content, either through a self-extracting process of the media file or through dedicated software used to visualize the digital media content.

After creation of the encapsulated media file the creator get access to the content of the media access part by entering the password which is preset by him within the media access part during creation of the encapsulated media file.

The invention comprises a solution for a time controlled access to digital media files for a limited period of time, wherein "time maniulations" can be detected during the runtime of the computer and, when it comes down to it, also to manipulations during the booting process of the computer of the user, and to recongnize such manipulations during the opening of a media file within a check as a forbidden "timeshift".

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a diagram of creating the media file according to an embodiment of the invention;
- Fig. 2: shows a general flowchart of an embodiment of a method according to the invention;
- Fig. 3: shows the creator determination section of Fig. 1,
- Fig. 4: shows the "BTE"-data correlation tester of Fig. 1,
- Fig. 5: shows the reference data section of Fig. 1,
- Fig. 6: shows the open "BTE"-file section between -B- and -C- of Fig. 2;
- Fig. 7: shows the convert-to-"BTE" section between -A-, -D- and -E- of Fig. 2;
- Fig. 8: shows the "BTE"-file-reset and closing section between -D-, -F- and -G-of Fig. 2;

### DESCRIPTION OF PREFERRED EMBODIMENTS

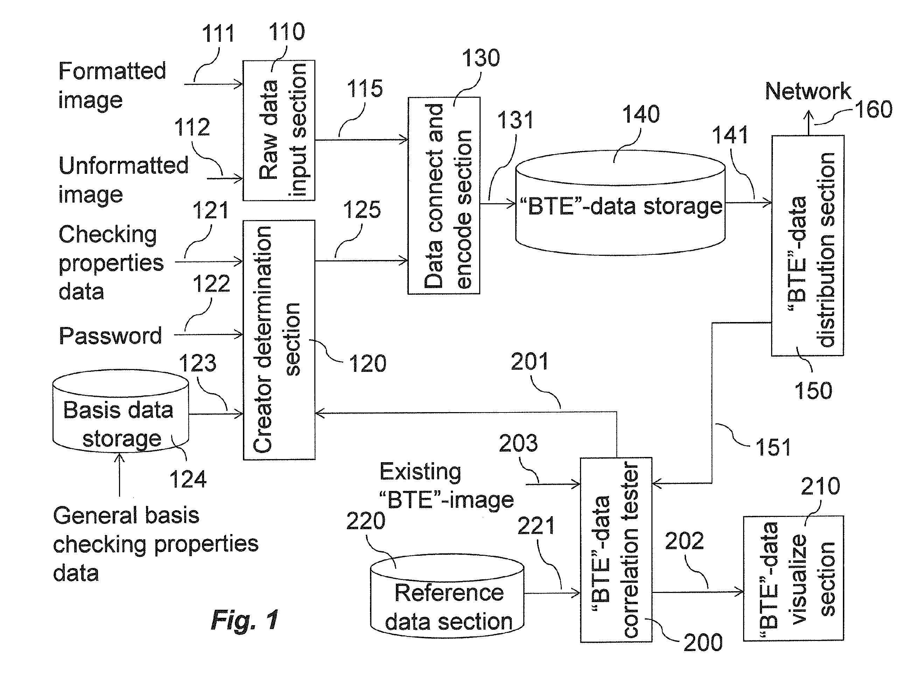

Fig. 1 shows a diagram using the method according to the invention for creation and restricted access to images as a possible embodiment of digital media files. Further digital media content can be e.g. sound and videos.

The diagram of Fig. 1 show portions of a software application adapted to run on a processor having memory for storing the application itself as well as related data. The data can be stored in databases or in file repositories and directories known by someone skilled in the art.

The program comprises in its data creation part a raw data input section 110 which can receive a formatted image 111 or an unformatted image 112. This raw data input section 110 symbolizes the possibility for the application to work on different image formats as jpg, bmp, tif, gif, tga etc, as well as the use of different codecs for creating multimedia files. An owner determination section 120 is adapted to receive checking properties data 121 as first data, an owner password 122 or retrieves second data 123 from a basis data storage 124 which is previously filled with general checking properties data.

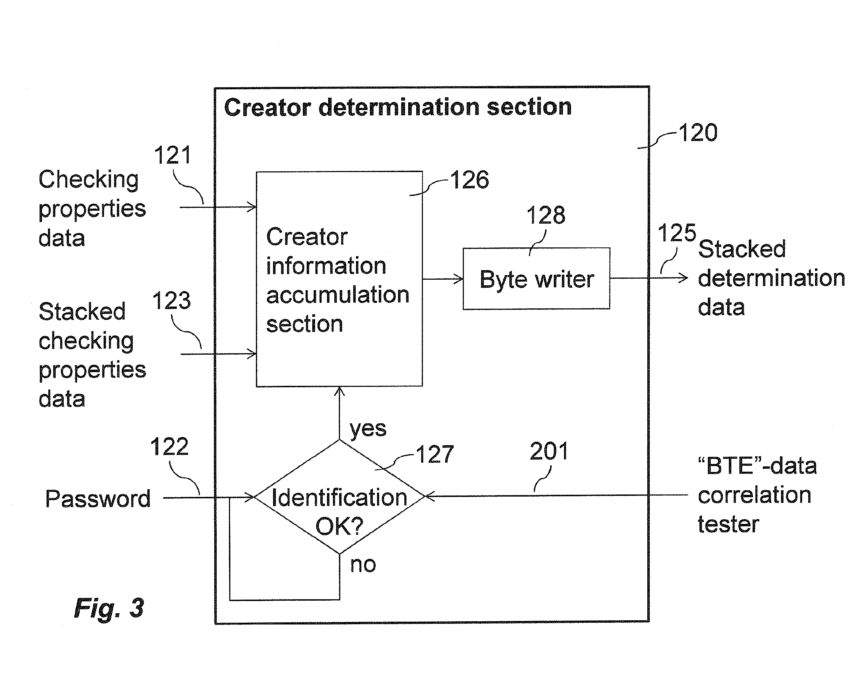

The creator determination section 120 also shown in Fig. 3 comprises a creator information accumulation section 126 using the first checking properties data 121 or the second stacked checking properties data 123 to allow creation of a specific protected media file. The same is true for the introduction of a password 122 which is checked in the identification section 127 before passing it to the creator information accumulation section 126 allowing creation of the encrypted media file through output 125 via a byte writer 128.

The further connection 201 as part of the identification section is explained later on.

The creator determination section 120 outputs key data 125 which are combined with the media file data 115 from the raw data input section 110 into a data connect and encode section 130 to create the converted media file 131 which can be stored in a data storage 140. The data connect and encode section 130 initially matches the inflowing data and encodes the digital media content with the key portion from the key data 125 into the encoded data stream 131.

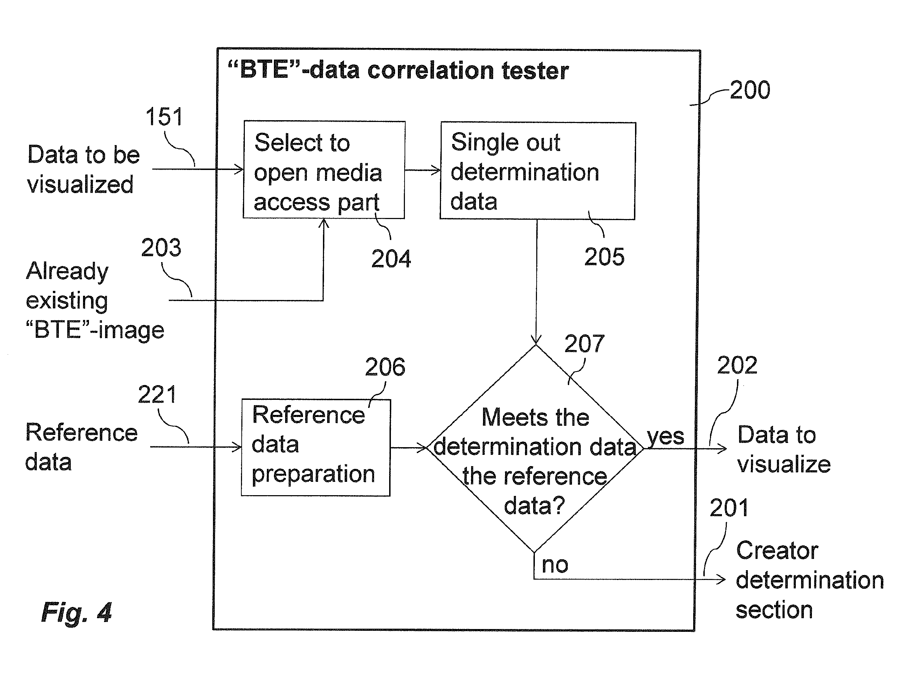

The data storage 140 is called the "BTE"-data storage since the method uses the suffix ".BTE" as data format, connected with this coding and retrieval program. The coded data stream 141 can then be distributed through over the outputting "BTE" data distribution section 150 to an external network 160 as the internet. The data stream is also forwarded as a stream 151 to the "BTE"-data correlation tester 200, which is shown in Fig. 4.

The "BTE"-data correlation tester 200 receives the data 151 to be visualized, which is just created through the method steps explained above. Furthermore, it is possible that an already existing "BTE"-image 203 is to be visualized. Said image data are prepared to be checked by selecting 204 and extracting 205 checking properties data from the media access part of the encapsulated media file and comparing them with the reference data 221.

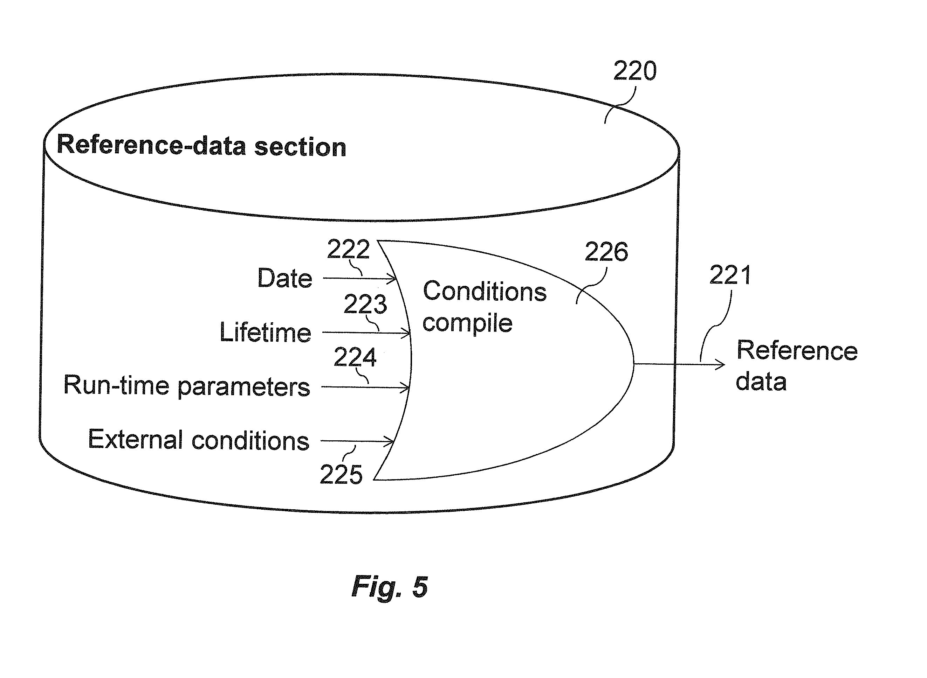

The reference data 221 is received from the reference data section 220, shown in detail in Fig. 5. Reference data can be inter alia the date (as an absolute point in time) 222, the intended life time 223 of the image (as an relative time interval in relation to a starttime), run time parameters 224 (as e.g. the certificate of a membership or the appearance of a specific hardware (dongle) or software (licence)) and external conditions 225 (as e.g. the access rights get by a third remote computer), which are compiled in the compiler 226 into single reference data information to be used in the correlation tester.

If the check of the singled out determination data 205 with the reference data 221 in section 207 is positive then the data 202 is forwarded to the "BTE"-data visualize section 210 to represent the data which would be a viewer in case of an image, a sound driver in case of a sound file and combined video and sound player in case of e.g. a video file.

In case that an existing "BTE"-image or data content 203 is to be shown, the "BTE"-data correlation tester 200 then executes the above mentioned steps directly.

If the check within the reference data in section 207 is negative then a request for identification 201 is made towards the creator determination section 120 giving the opportunity to enter the password to the access part of the encapsulated file and to renew the access rights, e.g. extending the life time within the time stamp.

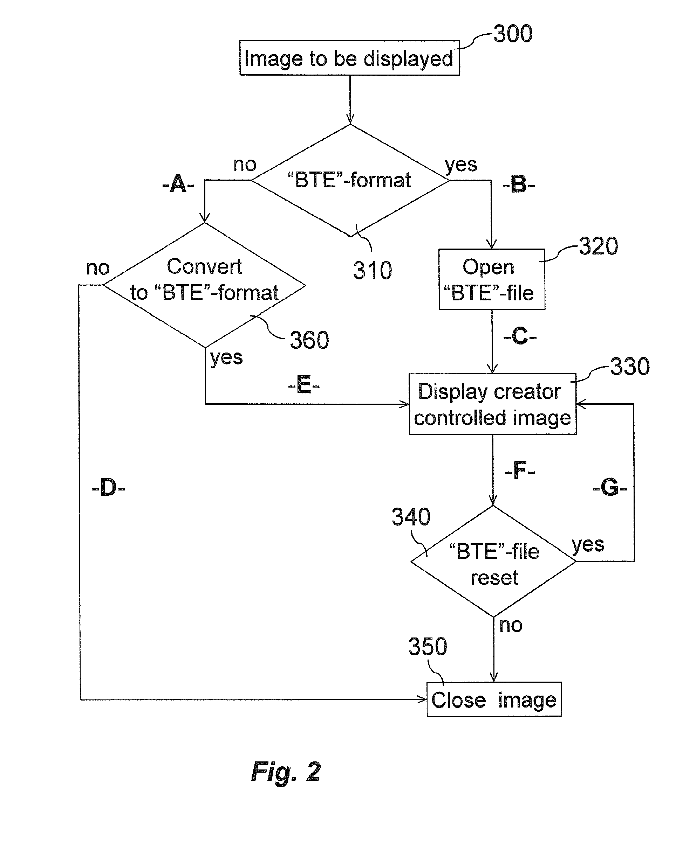

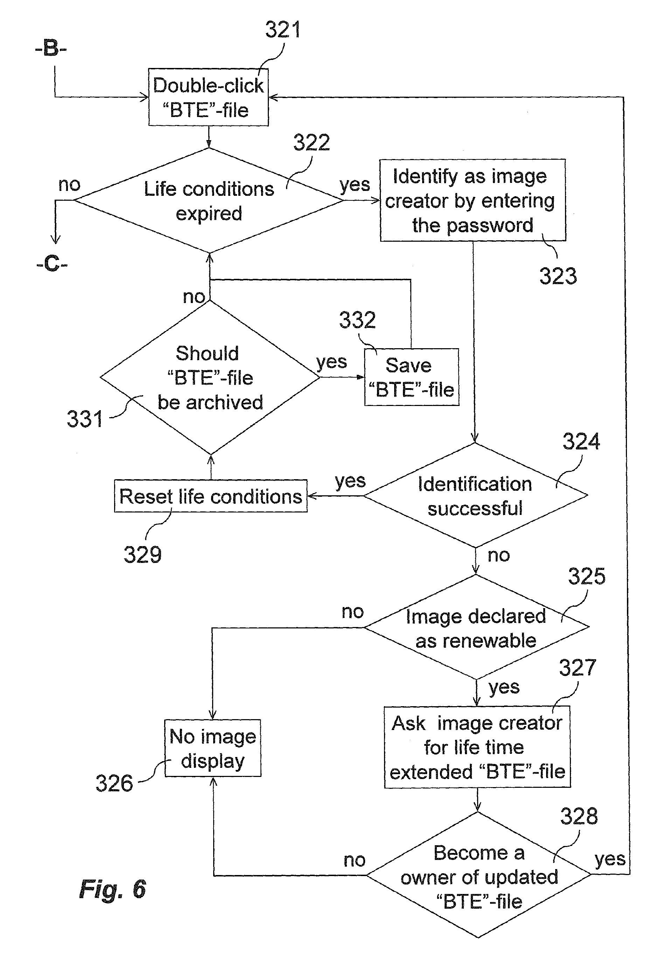

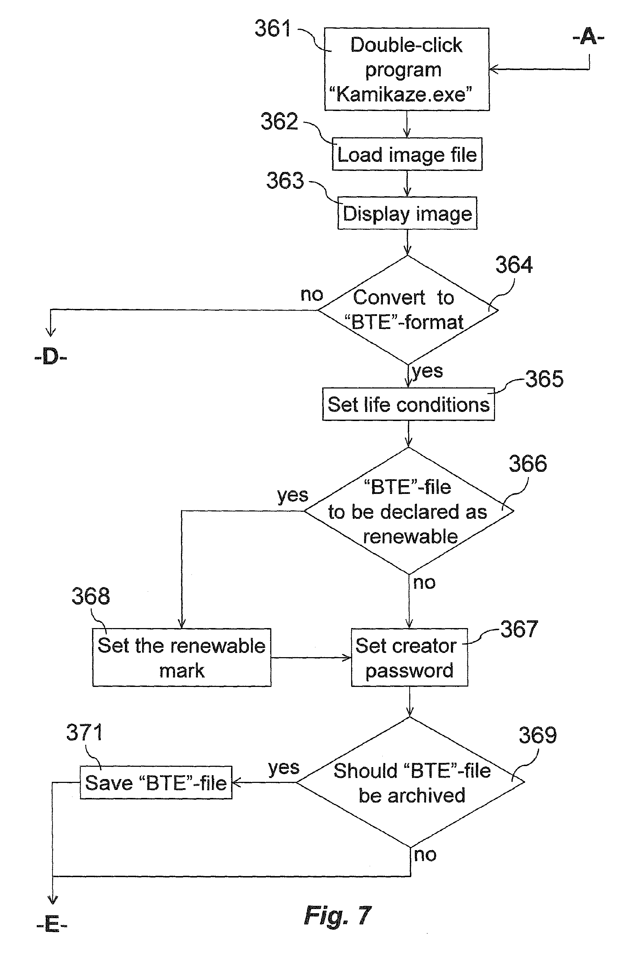

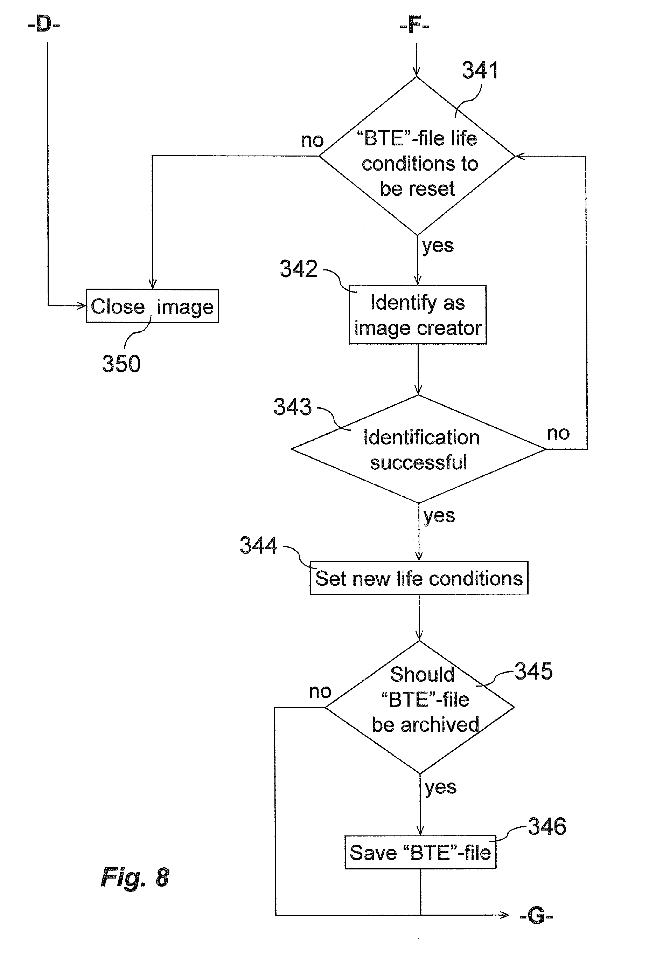

Fig. 2 shows a flowchart of a method to provide restricted access to a media file including steps of creation of the relevant data in the media access part in case the requested file is not yet a file allowing for restricted access. This method part is shown in Fig. 7 showing the convert-to-"BTE" section between -A-, -D- and -E- of Fig. 2. Fig. 6 shows the open "BTE"-file section between -B- and -C- of Fig. 2 in detail and Fig. 8 shows the "BTE"-file-reset and closing section between -D-, -F- and -G- of Fig. 2.

The image data to be displayed 300 is initially checked in format check module 310. If the media format is the coded "BTE"-format, then the file is opened in module 320 and displayed if access is granted.

In case that the media file to be displayed 300 is not in the "BTE"-format as checked in module 310 the media file is converted in module 360 to forward the converted file into the displayed creator controlled image module 330. If no conversion has to take place, then the program itself closes with step 350.

Fig. 6 shows the part of the system directly connected to the representation of the media content and the method steps connected to the lifetime check. It can therefore be seen as an independent embodiment part of the method according to the invention.

A media file is provided in a memory on the computer or accessed via the computer of the owner. Said file is intended to be opened. The owner action 321 of trying to open the "BTE" encoded file is noted as double-click the "BTE"-file. The "BTE" file is a digital media file being an encapsulated media file and comprising the actual digital media content and a media access part comprising an activation key. Double clicking triggers the check of a key information provided by the creator of the encapsulated media file, if it is in a predetermined relationship with said first activation key stored in association with the media access part provided by the creator. The owner provided information is a time indication delivered directly or indirectly by the owner which checked against the creator provided key information. This time information can be delivered at the verified system time of the computer system used by the owner. This time information is checked against the time indication in the activation key, being e.g. an expiry date and time. Access to the digital media content is then allowed (answer "no" guides to -C-) if the checking step is successful, or the software requests further information to identify the image creator 323.

The verified system time is obtained through use of a time deamon "bte_time_d". Said time deamon is started automatically during the boot-process of the computer of the user. The deamon provides the verified time to the check within the reference data in section 207. In this respect it is not necessary to synchronize the time with an external server. Upon start of the daemon it is only checked, if the time "t_last" (which is stored in the file "bte_time.bte" in an encrypted manner) is smaller than the current system time of the computer. If the stored time "t_last" is greater than a time manipulation happened, e.g. during the booting process, e.g. on BIOS level. This is checked by the control unit and measures are taken to avoid a breach of the data security. One possibility is a warning to readjust the system time to the correct value. Another possibility would be to set the flag "bte_stop" in said encrypted file "bte_time.bte" as TRUE which triggers the block of all local BTE image files, which cannot be opened anymore. If "bte_stop" is set in the encrypted file "bte_time.bte", then the time deamon "bte_time_d" issues into the communication channel 225 as verified system time not the current system time but the greatest value for the system time for example "31.12.9999". Then all stored BTE-images are considered outdated and cannot be opened anymore. This relates to a manipulation of the relevant internal system time during booting and before the deamon is started.

In an embodiment, the time deamon delivers the system time every 30 seconds to a variable "t" and stores the respective newest value "t_last" in the encrypted file "bte_time.bte". The time deamon "bte_time_d" compares all 30 seconds the system time of the computer with the time "t_last" as stored in "bte_time.bte", through building the difference "t" minus "t_last" to become "bte_t_30test". This time interval allows to use a relative time comparison to make a decision relating to the system time, which is considered to be absolute. This allows in intervals of 30 seconds to check any manipulation of the system time.

Based on the time relevant internal oscillator of the computer the check is made all 30 seconds, precisely. If the output time of two subsequently read system time is not exactly 30 seconds, then the system time was manipulated.

"bte_t_30test" is checked for time shifts as winter-time/sommer-time issues, time zone changes etc.. When the value of "bte_t30test" is non equal 30 seconds the additional time shift is stored as a time offset "t_offset" in the file "bte_time.bte". This time offset is taken into account in the further time checks in the reference data section 207 if the owner requests access to the media file. Of course beside 30 seconds, it is also possible to choose 1 minute, 2 or 5 minutes etc. as time basis for this check. This relates to detect a time shift manipulation of the user of the computer (and as such "owns" the media file stored on it) during the opening of a media file, especially when the system time of the computer had been changed into the future or into the past (outside legitimate changes as time zone changes during travel or summertime changes) through an entry performed or incited by the user.

It is noted that the activation key comprises at least a time indication which can also be used in said predetermined relationship that access is only granted after a specific date and time or for a specific time interval between a starting visualization time and an ending visualization time.

If the owner requesting access to the media file is not the creator in comparison step 324 then a remote request 325 is started wherein the "BTE"-format information comprises in the encapsulated file additional site information where the remote request can be launched. If this information is missing or the site cannot be reached, there is no visualization 326 of the media.

The encapsulated file comprises additional site information related to the creator of the "BTE"-file where identification relating to the media file and lifetime information is stored. The owner opens a communication channel to this site and requests for an updated version of the original "BTE"-file. This request can also comprise specific media new time information. The updated "BTE"-file or this new time information is transmitted back to the user computer and the encapsulated file is updated with this new time expiry information. It is possible to include additional information about remote servers to be accessed for the time check information and/or the nest life condition check 322. Further requirements as an additional password check can be transmitted and visualized together with the media content.

If the feedback from the request 327 is not handled by the creator, the owner gets no accessible "BTE"-file 328; then the image is not displayed 326, otherwise the owner get an accessible "BTE"-file, which he can open by double-clicking 321.

Fig. 7 explains in greater detail the conversion step 360. The computer user, being the owner of the media content and intended creator of the "BTE"-file starts the corresponding program 361, called "Kamikaze.exe". This triggers loading of the image file 362 and display, e.g. previsualization 363 of the image file. The user is then requested to decide, if the creation 364 of the "BTE"-file is to be engaged. Then the life conditions are to be set 365. This can comprise a starting date, an expiry date or an interval of time within which visualization of the media content is to be allowed. Said condition information will be part of the activation key.

Additionally, it is requested, if the file is declared to be renewable 366, then a renew flag is set 368 and stored together with site information to retrieve additional renew information. This site information allows the encapsulated file or the related program on the owner computer to open a communication channel to access this site with a transmittal of media identification information in order to ask for a renewal for this specific media content. Otherwise, only a creator password 367 is asked for and stored in the encapsulated file. Said password is used to protect the media access part which content e.g. the life time condition can be accessed and reset if the correct password is entered only.

If the now created "BTE"-file is to be archived 369 it is stored 371 in a direct or remote memory and control is given back to section -E- of Fig. 2.

Fig. 8 shows in greater detail the lifetime reset steps 340. If this request 341 is not to be followed, then the image is closed. Otherwise, the identification of the creator 342 is conducted. If this check is successful 343, then new life conditions are set 344 and stored within the encapsulated media file information. If the now to be created "BTE"-file is to be archived 345 it is stored 346 in a direct or remote memory and control is given back to section -G- of Fig. 2.

**LIST OF REFERENCE SIGNS**

| | | | |
|---|---|---|---|
| 110 | raw data input section | 206 | reference data preparation |
| 111 | formatted image | 207 | comparing section |
| 112 | unformatted image | 210 | "BTE"-data visualize section |
| 115 | media file data | 220 | reference data section |
| 120 | creator determination section | 221 | reference data transmittal |
| 121 | checking properties data | 222 | date |
| 122 | password | 223 | lifetime |
| 123 | data transmittal | 224 | rune-time parameters |
| 124 | basis data storage | 225 | external conditions |
| 125 | key data output | 226 | compilation of reference data |
| 126 | creator information accumulation section | 300 | display image |
| | | 310 | format check module |
| 127 | identification section | 320 | open file module |
| 128 | byte writer | 321 | opening step |
| 130 | data connect and encode section | 322 | life condition check |
| | | 323 | creator identification |
| 131 | converted media file | 324 | owner identification check |
| 140 | "BTE"-data storage | 325 | renewable check |
| 141 | coded data stream | 326 | access denied step |
| 150 | "BTE"-data distribution section | 327 | lifetime extension request |
| | | 328 | become an owner check |
| 151 | stream | 329 | reset life conditions |
| 160 | external network | 330 | display module |
| 200 | "BTE"-data correlation tester | 331 | archive request |
| 201 | request for identification | 332 | save "BTE"-file |
| 202 | data visualizing transmittal | 340 | reset module |
| 203 | existing "BTE"-media file | 341 | life condition reset request |
| 204 | select to open media access part | 342 | identification as image creator |
| | | 343 | identification of creator check |
| 205 | singling out section | 344 | setting new life conditions |
| 345 | archive request | 365 | setting of life time conditions |
| 346 | save "BTE"-file | 366 | renewable declaration check |
| 350 | end module | 367 | set creator password |
| 360 | conversion module | 368 | setting renewable flag |
| 361 | starting conversion program | 369 | archive request |
| 362 | loading image file | 371 | saving of "BTE"-file |
| 363 | previsualization of image file | | |
| 364 | conversion request | | |

## Claims

1. Method of controlling access to digital media content, especially pictures, videos and sound, wherein the digital media content is available within a computer providing time information, comprising the steps of:
providing an activation key associated to grant access to the digital media content, wherein the activation key (121, 124) comprises at least a time indication,
creating (130) an encapsulated media file (140, 346), comprising the actual digital media content (110) and a media access part (120) comprising said activation key (121, 124),
checking (200) key information provided by the owner to the encapsulated media file (140, 346), if it is in a predetermined relationship with said first activation key (121, 124) stored in association with the media access part (120), and wherein the check (200) comprises a check of the time indication of the activation key (121, 124) against time information for said predetermined relationship,
providing (210) access to the digital media content (110) if the checking step is successful,
**characterized in that** the time information is retrieved via a communication channel (225) from a time deamon.

2. Method according to claim 1, wherein the media access part (120) is created using a password (122) provided by the creator of the digital media file (130), wherein changing the content of the media access part (120) is enabled after entering said password (122) which is preset by the creator of the encapsulated media file (130) within the media access part (120).

3. Method according to claim 1 or 2, wherein after a failed time indication check media content identification information is transmitted via a communication channel to a second predetermined remote source and release time update information relating to said media content is retrieved via said communication channel from said predetermined second remote source updating the activation key (121, 124) with a renewed time indication allowing a positive check of the said predetermined relationship.

4. Method according to any one of claims 1 to 3, wherein the activation key (121, 124) further comprises further key identification information set by the creator and the check comprises a check of this information against owner specific reference information (221), especially identification information stored on the computer.

5. Method according to any one of claims 1 to 4, wherein the activation key (121, 124) further comprises a release check requirement and wherein media identification content information (110) is transmitted via a communication channel to a third predetermined remote source and release information relating to said media content is retrieved via said communication channel from said third predetermined remote source.

6. System for controlling access to digital media content, especially pictures, videos and sound, comprising a computer having a processor and a memory (140; 124, 220), wherein digital media is available within said computer and said computer is adapted to provide a time information, wherein the digital media (346) comprises an activation key (121, 124) associated to grant access to the digital media content (110) in an encapsulated media file (140, 346), comprising the actual digital media content (110) and a media access part (120) comprising said activation key and a password (122) to enter the media access part (120), wherein the activation key (121, 124) comprises at least a time indication, wherein the system is adapted to carry out a check of the time indication against said time information for a predetermined relationship to allow access to the digital media content, and wherein the time information is the verified system time of the computer retrieved via a communication channel (225) from a time deamon.

7. System according to claim 6, wherein after a failed time indication check the computer is adapted to transmit media content identification information via a communication channel to a second predetermined remote source and said second predetermined remote source is adapted to create and transmit release time update information relating to said media content via said communication channel from said predetermined second remote source to the computer updating the activation key with a renewed time indication allowing a positive check of the said predetermined relationship.

8. System according to any one of claims 6 or 7, wherein the activation key (121, 124) further comprises further key information set by the creator and the check comprises a check (207) of this information against owner specific reference information (220; 221).
